# EUROPEAN PATENT SPECIFICATION

(11) **EP 2 309 108 B1**
(45) Date of publication and mention of the grant of the patent: **11.12.2019**
(21) Application number: 08876707.4
(22) Date of filing: 24.12.2008
(51) Int. Cl.: F02C 7/18, F02C 9/18, F01D 25/12

(54) **Gas turbine with improved turn down operation**
Gasturbine mit verbessertem Teillastbetrieb
Turbine à gaz avec marge de réglage ameliorée

(30) Priority: 06.08.2008 JP 2008203234
(43) Date of publication of application: 13.04.2011
(73) Proprietor: Mitsubishi Heavy Industries, Ltd., Tokyo 108-8215 (JP)
(72) Inventor: KUBOTA, Tetsuro, Takasago-shi Hyogo 676-8686 (JP); TAKAHASHI, Tatsuji, Takasago-shi Hyogo 676-8686 (JP); FUJII, Keita, Takasago-shi Hyogo 676-8686 (JP); KATSURA, Hiroto, Takasago-shi Hyogo 676-0008 (JP)
(74) Representative: Henkel & Partner mbB
(86) International application number: PCT/JP2008/073377
(87) International publication number: WO 2010/016159

(56) References cited:
- EP-A2- 1 148 220
- WO-A2-97/23715
- JP-A- 5 171 958
- JP-A- 7 189 740
- JP-A- H05 171 958
- JP-A- 2002 339 708
- JP-A- 2002 339 708
- US-A1- 2003 046 938
- US-A1- 2009 104 020
- US-B1- 6 615 574
- US-B1- 6 615 574

## Description

### Technical Field

The present invention relates to a gas turbine, and more specifically relates to a gas turbine enabling turn down operation (operation at part load or operation at low load).

### Background Art

A gas turbine disclosed in JP 2007-182883 A is known as an example of a gas turbine enabling turn down operation.

US 2003/0046938 A1 discloses a gas turbine with two stator cooling air systems respectively connecting the compressor and the turbine for bleeding compressed air from the compressor to the turbine. A crossover flowpath is provided for connecting a flowpath with the flowpath through a crossover flowpath including an injector, a control/throttling valve and a sensor. The document teaches that the flow characteristics criteria influenced by opening the throttling valve in the crossover flowpath should be based on "ambient conditions" and that "the signal to the valve determining the opening degree of the crossover flowpath is a function of the difference between the sensed flow characteristics and the predetermined flow characteristics, i.e., a function of ambient conditions".

WO 97/23715 A2 discloses a gas turbine in which a separate cooling air line is provided from different pressure level positions of a compressor to each of plural rotor blade stages.

US 6,615,574 B1 discloses a gas turbine which is provided with a crossover path for allowing a selective flow between a low pressure line and a mid pressure line connecting a compressor with a turbine stage of the gas turbine.

JP 2002339708 A discloses a gas turbine in which a backflow prevention valve is provided in a compressed air line from a compressor to a turbine section.

JP 051711958 A discloses a gas turbine with a plurality of compressed air lines connecting various pressure stages of a compressor with a turbine section and flow amount control valves respectively arranged in such compressed air lines.

### Disclosure of Invention

When a gas turbine is operated at high load, the turbine inlet temperature (combustor exit temperature) of the gas turbine is kept high and thus the CO (carbon monoxide) emission from the gas turbine can be kept low. However, when a gas turbine is operated at low load or part load, the CO emission may increase as the turbine inlet temperature decreases. For this reason, the above-mentioned JP 2007-182883 A discloses a method that can maintain high turbine inlet temperatures even at low loads.

However, in the gas turbine disclosed in the JP 2007-182883 A, it is necessary to additionally provide (newly provide) a piping, a booster pump, and the like for pushing air extracted from a working fluid path before entering the combustor, into a working fluid path residing at a downstream of the combustor exit. This leads to a problem of complicating the system and the operation of the gas turbine, and a problem of incrementing the production cost and the maintenance cost.

The present invention was made to address such a situation, with an object of providing a gas turbine enabling turn down operation, by which the system and the operation of the gas turbine can be simplified, and also the production cost and the maintenance cost can be reduced.

In order to achieve the abovementioned object, the present invention provides a gas turbine as defined in claim 1, claim 2, claim 4 or claim 6.

The gas turbine according to a first aspect of the present invention is a gas turbine comprising: a compressor section for compressing combustion air; a combustor section for injecting a fuel into high pressure air being sent from this compressor section, to effect combustion so as to generate a high temperature combustion gas; a turbine section which is located at the downstream side of this combustor section, and is driven by the combustion gas coming out from the combustor section; a gas turbine casing which houses the compressor section, the combustor section, and the turbine section therein; a stator cooling air system for leading compressed air that has been extracted from midstream of the compressor section, into stator vanes which constitute the turbine section; and an air bleeding system for extracting compressed air from the exit of the compressor section to the outside of the gas turbine casing, wherein midstream of the stator cooling air system and midstream of the air bleeding system are connected via a connecting path, and midstream of this connecting path is connected with a flow rate control part.

According to the gas turbine of the first aspect of the present invention, the turn down operation is enabled by using the already-existing stator cooling air system and air bleeding system. Therefore, the system and the operation of the gas turbine can be simplified, and also the production cost and the maintenance cost can be reduced.

Moreover, upon the turn down operation, the flow rate control part (for example, a control valve) is opened. As a result, the (high pressure) compressed air that has been extracted from the exit (rear stage) of the compressor section bypasses the combustor section and runs through the stator cooling air system and the stator vanes until it flows in the working fluid path of the turbine section. Therefore, the temperature of the exhaust gas can be lowered.

Furthermore, upon the turn down operation, the (high pressure) compressed air that has been extracted from the exit (rear stage) of the compressor section bypasses the combustor section and runs through the stator cooling air system and the air bleeding system until it flows in the turbine section. Therefore, upon the turn down operation, the temperature of the turbine section can be lowered while keeping the turbine inlet temperature high, because of which the service life of parts constituting the turbine section such as turbine blades (rotor blades and stator vanes) can be elongated.

In the gas turbine a backflow prevention part is connected to the stator cooling air system at the upstream side of a merge point, where the downstream end of the connecting path is merging.

According to such a gas turbine, the compressed air led to the upstream side of the stator cooling air system via the connecting path and the flow rate control part (for example, a control valve) can be kept from flowing from the merge point toward the compressor section, by the backflow prevention part (for example, a check valve). Therefore, the backflow from the merge point to the compressor section can be reliably prevented.

The gas turbine according to a second aspect of the present invention is a gas turbine comprising: a compressor section for compressing combustion air; a combustor section for injecting a fuel into high pressure air being sent from this compressor section, to effect combustion so as to generate a high temperature combustion gas; a turbine section which is located at the downstream side of this combustor section, and is driven by the combustion gas coming out from the combustor section; and at least two stator cooling air systems for respectively leading at least two types of compressed air that have been extracted from at least two positions having different pressures of the compressor section, into respective stator vanes which constitute the turbine section, according to the pressure of the extracted compressed air, wherein at least two of the stator cooling air systems are connected via a connecting path.

According to the gas turbine of the second aspect of the present invention, the turn down operation is enabled by using the already-existing stator cooling air system. Therefore, the system and the operation of the gas turbine can be simplified, and also the production cost and the maintenance cost can be reduced.

Moreover, upon the turn down operation, the compressed air that has been extracted from the compressor section bypasses the combustor section and runs through the stator cooling air system(s) and the stator vanes (for example, fourth stage stator vanes) until it flows in the working fluid path of the turbine section. Therefore, the temperature of the exhaust gas can be lowered.

Furthermore, upon the turn down operation, the compressed air that has been extracted from the compressor section bypasses the combustor section and runs through the stator cooling air system(s) and the stator vanes (for example, fourth stage stator vanes) until it flows in the turbine section. Therefore, upon the turn down operation, the temperature of the turbine section can be lowered while keeping the turbine inlet temperature high, because of which the service life of parts constituting the turbine section such as turbine blades (rotor blades and stator vanes) can be elongated.

In the gas turbine a backflow prevention part is connected to the stator cooling air system at the upstream side of a merge point, where the downstream end of the connecting path is merging.

According to such a gas turbine, the compressed air led to the midstream of the stator cooling air system via the connecting path can be kept from flowing from the merge point toward the compressor section, by the backflow prevention part (for example, a check valve). Therefore, the backflow from the merge point to the compressor section can be reliably prevented.

The gas turbine according to the second aspect of the present invention preferably comprises: a first stator cooling air system for leading compressed air that has been extracted from a low-pressure stage of the compressor section, into low-pressure stage stator vanes which constitute the turbine section; and a second stator cooling air system for leading compressed air that has been extracted from a high-pressure stage of the compressor section, into high-pressure stage stator vanes which constitute the turbine section, wherein midstream of the first stator cooling air system and midstream of the second stator cooling air system are connected via a connecting path.

According to the gas turbine of the second aspect of the present invention, the turn down operation is enabled by using the already-existing stator cooling air system. Therefore, the system and the operation of the gas turbine can be simplified, and also the production cost and the maintenance cost can be reduced.

Moreover, upon the turn down operation, the (high pressure) compressed air that has been extracted from the high-pressure stage of the compressor section bypasses the combustor section and runs through the first stator cooling air system and the stator vanes (for example, fourth stage stator vanes) until it flows in the working fluid path of the turbine section. Therefore, the temperature of the exhaust gas can be lowered.

Furthermore, upon the turn down operation, the (high pressure) compressed air that has been extracted from the high-pressure stage of the compressor section bypasses the combustor section and runs through the first stator cooling air system and the stator vanes (for example, fourth stage stator vanes) until it flows in the turbine section. Therefore, upon the turn down operation, the temperature of the turbine section can be lowered while keeping the turbine inlet temperature high, because of which the service life of parts constituting the turbine section such as turbine blades (rotor blades and stator vanes) can be elongated.

The gas turbine according to a third aspect of the present invention is a gas turbine comprising: a compressor section for compressing combustion air; a combustor section for injecting a fuel into high pressure air being sent from this compressor section, to effect combustion so as to generate a high temperature combustion gas; a turbine section which is located at the downstream side of this combustor section, and is driven by the combustion gas coming out from the combustor section; a first stator cooling air system for leading compressed air that has been extracted from a low-pressure stage of the compressor section, into low-pressure stage stator vanes which constitute the turbine section; a second stator cooling air system for leading compressed air that has been extracted from a medium-pressure stage of the compressor section, into medium-pressure stage stator vanes which constitute the turbine section; and a third stator cooling air system for leading compressed air that has been extracted from a high-pressure stage of the compressor section, into high-pressure stage stator vanes which constitute the turbine section, wherein midstream of the second stator cooling air system and midstream of the third stator cooling air system are connected via a connecting path.

According to the gas turbine of the third aspect of the present invention, the turn down operation is enabled by using the already-existing stator cooling air system. Therefore, the system and the operation of the gas turbine can be simplified, and also the production cost and the maintenance cost can be reduced.

Moreover, upon the turn down operation, the (high pressure) compressed air that has been extracted from the high-pressure stage of the compressor section bypasses the combustor section and runs through the second stator cooling air system and the stator vanes (for example, third stage stator vanes) until it flows in the working fluid path of the turbine section. Therefore, the temperature of the exhaust gas can be lowered.

Furthermore, upon the turn down operation, the (high pressure) compressed air that has been extracted from the high-pressure stage of the compressor section bypasses the combustor section and runs through the second stator cooling air system and the stator vanes (for example, third stage stator vanes) until it flows in the turbine section. Therefore, upon the turn down operation, the temperature of the turbine section can be lowered while keeping the turbine inlet temperature high, because of which the service life of parts constituting the turbine section such as turbine blades (rotor blades and stator vanes) can be elongated.

The gas turbine is more preferable if a backflow prevention part is connected to the second stator cooling air system at the upstream side of a merge point, where the downstream end of the connecting path is merging.

According to such a gas turbine, the compressed air led to the midstream of the second stator cooling air system via the connecting path can be kept from flowing from the merge point toward the compressor section, by the backflow prevention part (for example, a check valve). Therefore, the backflow from the merge point to the compressor section can be reliably prevented.

The gas turbine according to a fourth aspect of the present invention is a gas turbine comprising: a compressor section for compressing combustion air; a combustor section for injecting a fuel into high pressure air being sent from this compressor section, to effect combustion so as to generate a high temperature combustion gas; a turbine section which is located at the downstream side of this combustor section, and is driven by the combustion gas coming out from the combustor section; and a rotor cooling air system for leading compressed air that has been extracted from the exit of the compressor section, into a rotor which constitutes the turbine section, wherein midstream of the rotor cooling air system is connected with a boost compressor, and a bypass system for bypassing the boost compressor is provided.

According to the gas turbine of the fourth aspect of the present invention, upon the turn down operation, the boost compressor is operated. As a result, the (high pressure) compressed air that has been extracted from the high-pressure stage of the compressor section bypasses the combustor section and runs through the rotor cooling air system and the rotor blades until it is forcibly (vigorously) led in the working fluid path of the turbine section. Therefore, the temperature of the exhaust gas can be lowered.

Moreover, upon the turn down operation, the (high pressure) compressed air that has been extracted from the exit (rear stage) of the compressor section bypasses the combustor section and runs through the rotor cooling air system until it flows in the turbine section. Therefore, upon the turn down operation, the temperature of the turbine section can be lowered while keeping the turbine inlet temperature high, because of which the service life of parts constituting the turbine section such as turbine blades (rotor blades and stator vanes) can be elongated.

The gas turbine enabling turn down operation of the present invention can offer effects of simplifying the system and the operation of the gas turbine, and reducing the production cost and the maintenance cost.

### Brief Description of Drawings

FIG. 1 is a system diagram of the gas turbine according to a first example serving to explain features of the present invention.
FIG. 2 is a system diagram of the gas turbine according to a first embodiment of the present invention.
FIG. 3 is a system diagram of the gas turbine according to a second example serving to explain features of the present invention.
FIG. 4 is a system diagram of the gas turbine according to a second embodiment of the present invention.
FIG. 5 is a system diagram of the gas turbine according to a third example serving to explain features of the present invention.
FIG. 6 is a system diagram of the gas turbine according to a third embodiment of the present invention.
FIG. 7 is a system diagram of the gas turbine according to a fourth example serving to explain features of the present invention.
FIG. 8 is a system diagram of the gas turbine according to an fourth embodiment of the present invention.
FIG. 9 is a system diagram of the gas turbine according to a fifth example serving to explain features of the present invention.
FIG. 10 is a system diagram of the gas turbine according to a fifth embodiment of the present invention.
FIG. 11 is a system diagram of the gas turbine according to an sixth example serving to explain features of the present invention.
FIG. 12 is a system diagram of the gas turbine according to a sixth embodiment of the present invention.
FIG. 13 is a system diagram of the gas turbine according to a seventh example serving to explain features of the present invention.
FIG. 14 is a system diagram of the gas turbine according to a seventh embodiment of the present invention.
FIG. 15 is a system diagram of the gas turbine according to a eighth embodiment of the present invention.
FIG. 16 is a system diagram of the gas turbine according to a ninth embodiment of the present invention.
FIG. 17 is a system diagram of the gas turbine according to a tenth embodiment of the present invention.
FIG. 18 is a system diagram of the gas turbine according to an eleventh embodiment of the present invention.
FIG. 19 is a system diagram of the gas turbine according to a twelfth embodiment of the present invention.
FIG. 20 is a system diagram of the gas turbine according to a thirteenth embodiment of the present invention.
FIG. 21 is a system diagram of the gas turbine according to a fourteenth embodiment of the present invention.

### Explanation of Reference:

- 1:: Gas turbine
- 2:: Compressor section
- 3:: Combustor section
- 4:: Turbine section
- 5:: Stator cooling air system
- 6:: Rotor cooling air system (air bleeding system)
- 12:: Connecting pipe (connecting path)
- 13:: Second control valve (flow rate control part)
- 21:: Gas turbine
- 22:: Merge point
- 23:: Check valve (backflow prevention part)
- 31:: Gas turbine
- 41:: Gas turbine
- 42:: Merge point
- 51:: Gas turbine
- 61:: Gas turbine
- 71:: Gas turbine
- 81:: Gas turbine
- 91:: Gas turbine
- 92:: Stator cooling air system
- 93:: Rotor cooling air system (air bleeding system)
- 96:: Connecting pipe (connecting path)
- 97:: Second control valve (flow rate control part)
- 101:: Gas turbine
- 102:: Merge point
- 103:: Check valve (backflow prevention part)
- 111:: Gas turbine
- 121:: Gas turbine
- 122:: Merge point
- 131:: Gas turbine
- 132:: First connecting pipe (connecting path)
- 133:: Second control valve (flow rate control part)
- 134:: Second connecting pipe (connecting path)
- 135:: Third control valve (flow rate control part)
- 136:: Merge point
- 141:: Gas turbine
- 142:: Check valve (backflow prevention part)
- 151:: Gas turbine
- 152:: First stator cooling air system
- 153:: Second stator cooling air system
- 154:: Third stator cooling air system
- 155:: Rotor cooling air system
- 156:: Connecting pipe (connecting path)
- 161:: Gas turbine
- 162:: Merge point
- 163:: Check valve (backflow prevention part)
- 171:: Gas turbine
- 181:: Gas turbine
- 182:: Merge point
- 191:: Gas turbine
- 201:: Gas turbine
- 202:: Merge point
- 211:: Gas turbine
- 212:: Rotor cooling air system
- 214:: Boost compressor
- 215:: Bypass system

### Best Mode for Carrying Out the Invention

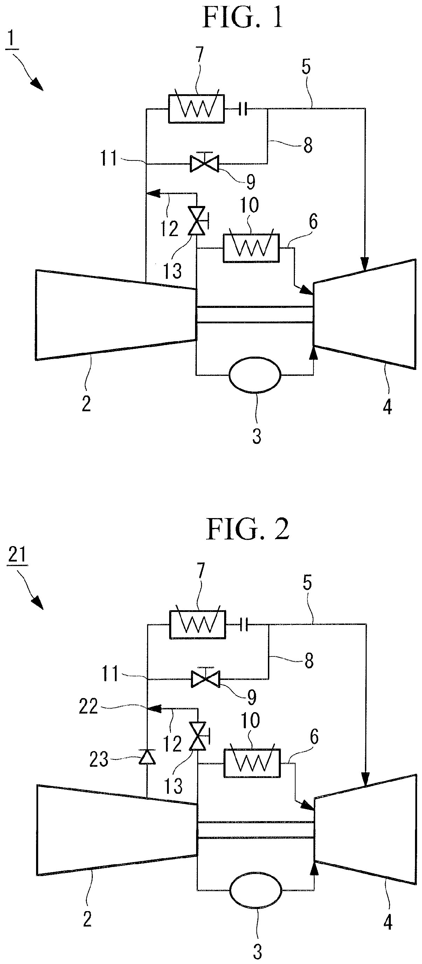

Hereunder is a description of the gas turbine according to a first example serving to explain features of the present invention with reference to FIG. 1. FIG. 1 is a system diagram of the gas turbine according to this example. As shown in FIG. 1, the gas turbine 1 of this examplecomprises: a compressor section 2 for compressing combustion air; a combustor section 3 for injecting a fuel into high pressure air being sent from this compressor section 2, to effect combustion so as to generate a high temperature combustion gas; a turbine section 4 which is located at the downstream side of this combustor section 3, and is driven by the combustion gas coming out from the combustor section 3; a gas turbine casing (not shown) which houses the compressor section 2, the combustor section 3, and the turbine section 4 therein; a stator cooling air system 5 for leading (medium pressure) compressed air that has been extracted from midstream (mid stage) of the compressor section 2, into stator vanes (for example, second stage stator vanes) which constitute the turbine section 4; and a rotor cooling air system (air bleeding system) 6 for extracting (high pressure) compressed air from the exit (rear stage) of the compressor section 2 to the outside of the gas turbine casing, and leading the air into a rotor (not shown) which constitutes the turbine section 4, as main components.

At midstream of the stator cooling air system 5, there is a first cooler 7 which cools down the compressed air passing therethrough connected. In addition, the stator cooling air system 5 is connected with a bypass system 8 which bypasses the first cooler 7 (that is to say, which connects between a part of the stator cooling air system 5 at the upstream side of the first cooler 7 and another part of the stator cooling air system 5 at the downstream side of the first cooler 7). Moreover, at midstream of this bypass system 8, there is a control valve 9 for adjusting the air flow rate of the bypass system 8 connected.

Meanwhile, at midstream of the rotor cooling air system 6, there is a second cooler 10 which cools down the compressed air passing therethrough connected. In addition, the rotor cooling air system 6 at the upstream side of the second cooler 10 and the stator cooling air system 5 at the upstream side of the branch point 11, where the upstream end of the bypass system 8 is branching, are connected by a connecting pipe (connecting path) 12. At midstream of this connecting pipe 12, there is a second control valve (flow rate control part) 13 connected, the opening degree of which can be adjusted by a controller (not shown).

Regarding the connecting pipe 12 for extracting (high pressure) compressed air from the exit of the compressor section 2 to the outside of the gas turbine casing, and connecting to the stator cooling air system 5, the upstream end of the connecting pipe 12 may be directly connected to the exit of the compressor section 2 for use as the air bleeding system.

According to the gas turbine 1 of this example, the turn down operation is enabled by using the stator cooling air system 5 which is already existing therein (as an essential component). Therefore, the system and the operation of the gas turbine can be simplified, and also the production cost and the maintenance cost can be reduced.

In addition, if the already-existing rotor cooling air system 6 is used as the air bleeding system, the system and the operation of the gas turbine can be further simplified, and the production cost and the maintenance cost can be further reduced.

Moreover, upon the turn down operation, the second control valve 13 is opened. As a result, the (high pressure) compressed air that has been extracted from the exit (rear stage) of the compressor section 2 bypasses the combustor section 3 and runs through the stator cooling air system 5 and the.stator vanes (not shown) until it flows in the working fluid path of the turbine section 4. Therefore, the temperature of the exhaust gas can be lowered. Furthermore, upon the turn down operation, the (high pressure) compressed air that has been extracted from the exit (rear stage) of the compressor section 2 bypasses the combustor section 3 and runs through the stator cooling air system 5 until it flows in the turbine section 4. Therefore, upon the turn down operation, the temperature of the turbine section 4 can be lowered while keeping the turbine inlet temperature high, because of which the service life of parts constituting the turbine section 4 such as turbine blades (rotor blades and stator vanes) can be elongated.

During the normal operation (for example, operation at full load), the second control valve 13 is closed. As a result, the (high pressure) compressed air that has been extracted from the exit (rear stage) of the compressor section 2 runs through the rotor cooling air system 6 until it is all let in the turbine section 4.

Here is a description of the gas turbine according to a first embodiment of the present invention with reference to FIG. 2. FIG. 2 is a system diagram of the gas turbine according to this embodiment.

As shown in FIG. 2, the gas turbine 21 of this embodiment differs from the gas turbine of the aforementioned first example, in the point where a check valve (backflow prevention part) 23 is connected to the stator cooling air system 5 at the upstream side of a merge point 22, where the downstream end of the connecting pipe 12 is merging. The other components are the same as those of the aforementioned first example, and thus these components are not described herein.

According to the gas turbine 21 of this embodiment, the compressed air led to the upstream side of the stator cooling air system 5 via the connecting pipe 12 and the second control valve 13 can be kept from flowing from the merge point 22 toward the compressor section 2, by the check valve 23. Therefore, the backflow from the merge point 22 to the compressor section 2 can be reliably prevented. The other operations and effects are the same as those of the aforementioned first example, and thus are not described herein.

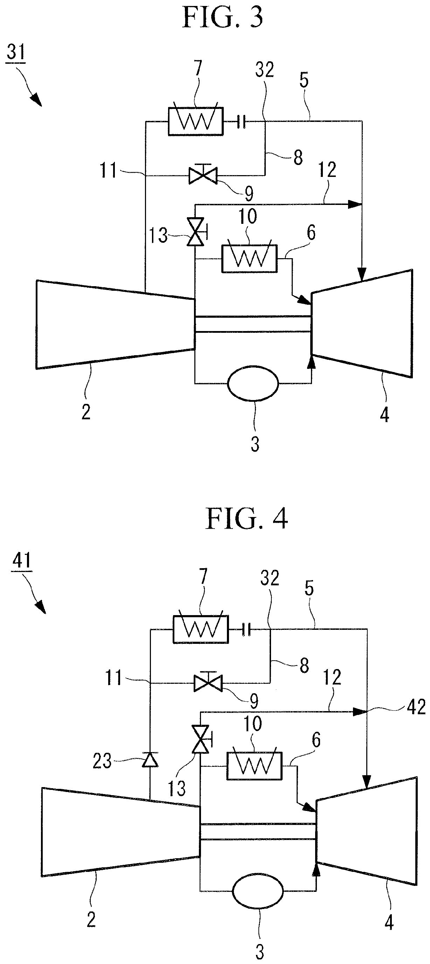

Here is a description of the gas turbine according to a second example serving to explain features of the present invention with reference to FIG. 3. FIG. 3 is a system diagram of the gas turbine according to this example. As shown in FIG. 3, the gas turbine 31 of this examplediffers from the gas turbine of the aforementioned first example, in the point where the downstream end of the connecting pipe 12 is connected to the stator cooling air system 5 at the downstream side of a merge point 32, where the downstream end of the bypass system 8 is merging. The other components are the same as those of the aforementioned first example, and thus these components are not described herein.

According to the gas turbine 31 of this example, the turn down operation is enabled by using the stator cooling air system 5 which is already existing therein (as an essential component). Therefore, the system and the operation of the gas turbine can be simplified, and also the production cost and the maintenance cost can be reduced.

Moreover, upon the turn down operation, the second control valve 13 is opened. As a result, the (high pressure) compressed air that has been extracted from the exit (rear stage) of the compressor section 2 bypasses the combustor section 3 and runs through the stator cooling air system 5 and the stator vanes (not shown) until it flows in the working fluid path of the turbine section 4. Therefore, the temperature of the exhaust gas can be lowered. Furthermore, upon the turn down operation, the (high pressure) compressed air that has been extracted from the exit (rear stage) of the compressor section 2 bypasses the combustor section 3 and runs through the stator cooling air system 5 until it flows in the turbine section 4. Therefore, upon the turn down operation, the temperature of the turbine section 4 can be lowered while keeping the turbine inlet temperature high, because of which the service life of parts constituting the turbine section 4 such as turbine blades (rotor blades and stator vanes) can be elongated.

During the normal operation (for example, operation at full load), the second control valve 13 is closed. As a result, the (high pressure) compressed air that has been extracted from the exit (rear stage) of the compressor section 2 runs through the rotor cooling air system 6 until it is all let in the turbine section 4.

Here is a description of the gas turbine according to a second embodiment of the present invention with reference to FIG. 4. FIG. 4 is a system diagram of the gas turbine according to this embodiment.

As shown in FIG. 4, the gas turbine 41 of this embodiment differs from the gas turbine of the aforementioned second example, in the point where the check valve 23 is connected to the stator cooling air system 5 at the upstream side of the branch point 11, where the upstream end of the bypass system 8 is branching. The other components are the same as those of the aforementioned second example, and thus these components are not described herein.

According to the gas turbine 41 of this embodiment, the compressed air led to the downstream side of the stator cooling air system 5 via the connecting pipe 12 and the second control valve 13 can be kept from flowing from a merge point 42, where the downstream end of the connecting pipe 12 is merging, toward the compressor section 2, by the check valve 23. Therefore, the backflow from the merge point 42 to the compressor section 2 can be reliably prevented. The other operations and effects are the same as those of the aforementioned second example, and thus are not described herein.

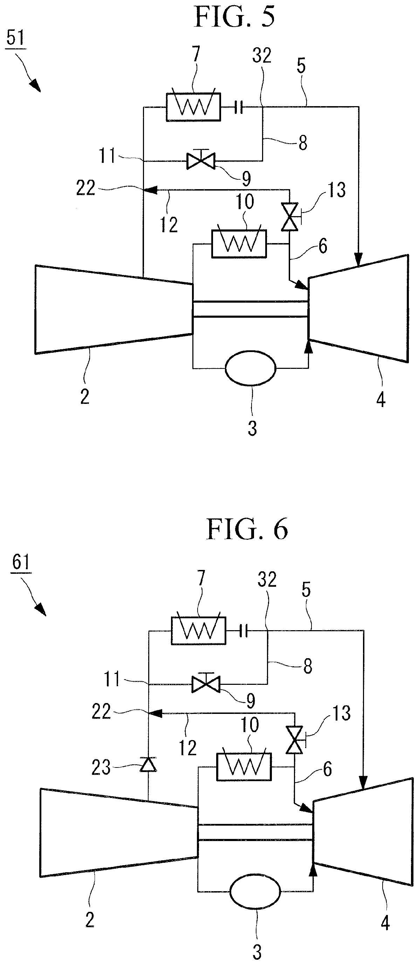

Here is a description of the gas turbine according to a third example serving to explain features of the present invention with reference to FIG. 5. FIG. 5 is a system diagram of the gas turbine according to this example. As shown in FIG. 5, the gas turbine 51 of this examplediffers from the gas turbine of the aforementioned first example, in the point where the upstream end of the connecting pipe 12 is connected to the rotor cooling air system 6 at the downstream side of the second cooler 10. The other components are the same as those of the aforementioned first example, and thus these components are not described herein.

According to the gas turbine 51 of this example, the turn down operation is enabled by using the stator cooling air system 5 and the rotor cooling air system 6 which are already existing therein (as essential components). Therefore, the system and the operation of the gas turbine can be simplified, and also the production cost and the maintenance cost can be reduced. Moreover, upon the turn down operation, the second control valve 13 is opened. As a result, the (high pressure) compressed air that has been extracted from the exit (rear stage) of the compressor section 2 bypasses the combustor section 3 and runs through the stator cooling air system 5 and the stator vanes (not shown) until it flows in the working fluid path of the turbine section 4. Therefore, the temperature of the exhaust gas can be lowered. Furthermore, upon the turn down operation, the (high pressure) compressed air that has been extracted from the exit (rear stage) of the compressor section 2 bypasses the combustor section 3 and runs through the stator cooling air system 5 and the rotor cooling air system 6 until it flows in the turbine section 4. Therefore, upon the turn down operation, the temperature of the turbine section 4 can be lowered while keeping the turbine inlet temperature high, because of which the service life of parts constituting the turbine section 4 such as turbine blades (rotor blades and stator vanes) can be elongated. During the normal operation (for example, operation at full load), the second control valve 13 is closed. As a result, the (high pressure) compressed air that has been extracted from the exit (rear stage) of the compressor section 2 runs through the rotor cooling air system 6 until it is all let in the turbine section 4.

Here is a description of the gas turbine according to a third embodiment of the present invention with reference to FIG. 6. FIG. 6 is a system diagram of the gas turbine according to this embodiment.

As shown in FIG. 6, the gas turbine 61 of this embodiment differs from the gas turbine of the aforementioned third example, in the point where the check valve 23 is connected to the stator cooling air system 5 at the upstream side of the merge point 22, where the downstream end of the connecting pipe 12 is merging. The other components are the same as those of the aforementioned third example, and thus these components are not described herein.

According to the gas turbine 51 of this embodiment, the compressed air led to the upstream side of the stator cooling air system 5 via the connecting pipe 12 and the second control valve 13 can be kept from flowing from the merge point 22 toward the compressor section 2, by the check valve 23. Therefore, the backflow from the merge point 22 to the compressor section 2 can be reliably prevented. The other operations and effects are the same as those of the aforementioned third example, and thus are not described herein.

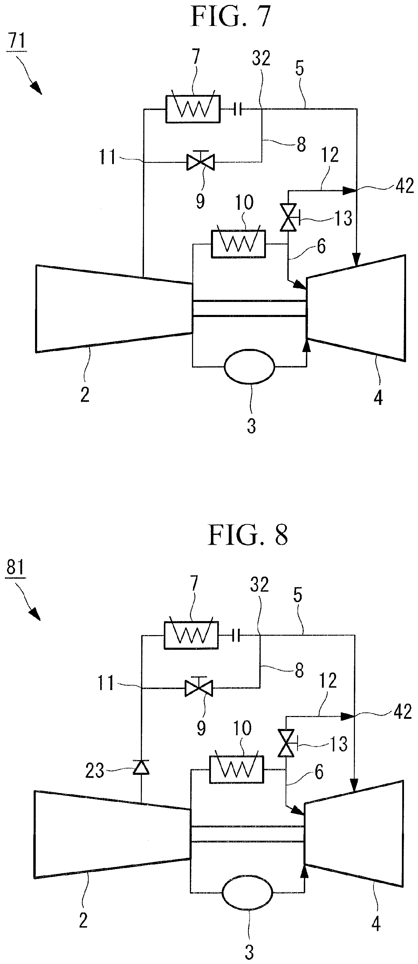

Here is a description of the gas turbine according to a fourth example serving to explain features of the present invention with reference to FIG. 7. FIG. 7 is a system diagram of the gas turbine according to this example.

As shown in FIG. 7, the gas turbine 71 of this examplediffers from the gas turbine of the aforementioned third example, in the point where the downstream end of the connecting pipe 12 is connected to the stator cooling air system 5 at the downstream side of the merge point 32, where the downstream end of the bypass system 8 is merging. The other components are the same as those of the aforementioned third example, and thus these components are not described herein.

According to the gas turbine 71 of this example, the turn down operation is enabled by using the stator cooling air system 5 and the rotor cooling air system 6 which are already existing therein (as essential components). Therefore, the system and the operation of the gas turbine can be simplified, and also the production cost and the maintenance cost can be reduced.

Moreover, upon the turn down operation, the second control valve 13 is opened. As a result, the (high pressure) compressed air that has been extracted from the exit (rear stage) of the compressor section 2 bypasses the combustor section 3 and runs through the stator cooling air system 5 and the stator vanes (not shown) until it flows in the working fluid path of the turbine section 4. Therefore, the temperature of the exhaust gas can be lowered.

Furthermore, upon the turn down operation, the (high pressure) compressed air that has been extracted from the exit (rear stage) of the compressor section 2 bypasses the combustor section 3 and runs through the stator cooling air system 5 and the rotor cooling air system 6 until it flows in the turbine section 4. Therefore, upon the turn down operation, the temperature of the turbine section 4 can be lowered while keeping the turbine inlet temperature high, because of which the service life of parts constituting the turbine section 4 such as turbine blades (rotor blades and stator vanes) can be elongated.

During the normal operation (for example, operation at full load), the second control valve 13 is closed. As a result, the (high pressure) compressed air that has been extracted from the exit (rear stage) of the compressor section 2 runs through the rotor cooling air system 6 until it is all let in the turbine section 4.

Here is a description of the gas turbine according to an fourth embodiment of the present invention with reference to FIG. 8. FIG. 8 is a system diagram of the gas turbine according to this embodiment.

As shown in FIG. 8, the gas turbine 81 of this embodiment differs from the gas turbine of the aforementioned fourth example, in the point where the check valve (backflow prevention part) 23 is connected to the stator cooling air system 5 at the upstream side of the branch point 11, where the upstream end of the bypass system 8 is branching. The other components are the same as those of the aforementioned fourth example, and thus these components are not described herein.

According to the gas turbine 81 of this embodiment, the compressed air led to the downstream side of the stator cooling air system 5 via the connecting pipe 12 and the second control valve 13 can be kept from flowing from the merge point 42, where the downstream end of the connecting pipe 12 is merging, toward the compressor section 2,:by the check valve 23. Therefore, the backflow from the merge point 42 to the compressor section 2 can be reliably prevented. The other operations and effects are the same as those of the aforementioned fourth example, and thus are not described herein.

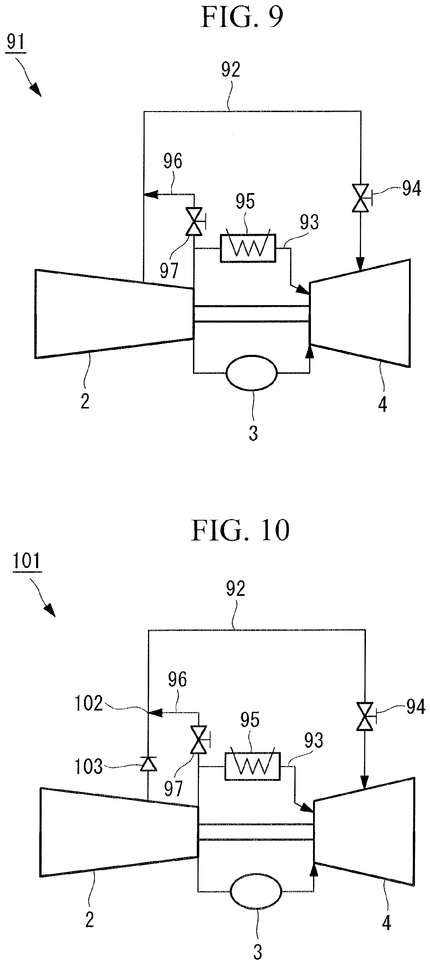

Here is a description of the gas turbine according to a fifth example serving to explain features of the present invention with reference to FIG. 9. FIG. 9 is a system diagram of the gas turbine according to this example. As shown in FIG. 9, the gas turbine 91 of this examplecomprises: a compressor section 2 for compressing combustion air; a combustor section 3 for injecting a fuel into high pressure air being sent from this compressor section 2, to effect combustion so as to generate a high temperature combustion gas; a turbine section 4 which is located at the downstream side of this combustor section 3, and is driven by the combustion gas coming out from the combustor section 3; a gas turbine casing (not shown) which houses the compressor section 2, the combustor section 3, and the turbine section 4 therein; a stator cooling air system 92 for leading (medium pressure) compressed air that has been extracted from midstream (mid stage) of the compressor section 2, into stator vanes (for example, second stage stator vanes) which constitute the turbine section 4; and a rotor cooling air system (air bleeding system) 93 for extracting (high pressure) compressed air from the exit (rear stage) of the compressor section 2 to the outside of the gas turbine casing, and leading the air into a rotor (not shown) which constitutes the turbine section 4, as main components.

At midstream of the stator cooling air system 92, there is a first control valve 94 connected, the opening degree of which can be adjusted by a controller (not shown). Meanwhile, at midstream of the rotor cooling air system 93, there is a cooler 95 which cools down the compressed air passing therethrough connected. In addition, the rotor cooling air system 93 at the upstream side of the cooler 95 and the stator cooling air system 92 at the upstream side of the first control valve 94 are connected by a connecting pipe (connecting path) 96. At midstream of this connecting pipe 96, there is a second control valve (flow rate control part) 97 connected, the opening degree of which can be adjusted by a controller (not shown).

Regarding the connecting pipe 96 for extracting (high pressure) compressed air from the exit of the compressor section 2 to the outside of the gas turbine casing, and connecting to the stator cooling air system 92, the upstream end of the connecting pipe 96 may be directly connected to the exit of the compressor section 2 for use as the air bleeding system.

According to the gas turbine 91 of this example, the turn down operation is enabled by using the stator cooling air system 92 which is already existing therein (as an essential component). Therefore, the system and the operation of the gas turbine can be simplified, and also the production cost and the maintenance cost can be reduced. Moreover, upon the turn down operation, the second control valve 97 is opened. As a result, the (high pressure) compressed air that has been extracted from the exit (rear stage) of the compressor section 2 bypasses the combustor section 3 and runs through the stator cooling air system 92 and the stator vanes (not shown) until it flows in the working fluid path of the turbine section 4. Therefore, the temperature of the exhaust gas can be lowered. Furthermore, upon the turn down operation, the (high pressure) compressed air that has been extracted from the exit (rear stage) of the compressor section 2 bypasses the combustor section 3 and runs through the stator cooling air system 92 and the rotor cooling air system 93 until it flows in the turbine section 4 Therefore, upon the turn down operation, the temperature of the turbine section 4 can be lowered while keeping the turbine inlet temperature high, because of which the service life of parts constituting the turbine section 4 such as turbine blades (rotor blades and stator vanes) can be elongated. During the normal operation (for example, operation at full load), the second control valve 97 is closed. As a result, the (high pressure) compressed air that has been extracted from the exit (rear stage) of the compressor section 2 runs through the rotor cooling air system 93 until it is all let in the turbine section 4.

Here is a description of the gas turbine according to a fifth embodiment of the present invention with reference to FIG. 10. FIG. 10 is a system diagram of the gas turbine according to this embodiment.

As shown in FIG. 10, the gas turbine 101 of this embodiment differs from the gas turbine of the aforementioned fifth example, in the point where a check valve (backflow prevention part) 103 is connected to the stator cooling air system 92 at the upstream side of a merge point 102, where the downstream end of the connecting pipe 96 is merging. The other components are the same as those of the aforementioned fifth example, and thus these components are not described herein.

According to the gas turbine 101 of this embodiment, the compressed air led to the upstream side of the stator cooling air system 92 via the connecting pipe 96 and the second control valve 97 can be kept from flowing from the merge point 102 toward the compressor section 2, by the check valve 103. Therefore, the backflow from the merge point 102 to the compressor section 2 can be reliably prevented. The other operations and effects are the same as those of the aforementioned fifth example, and thus are not described herein.

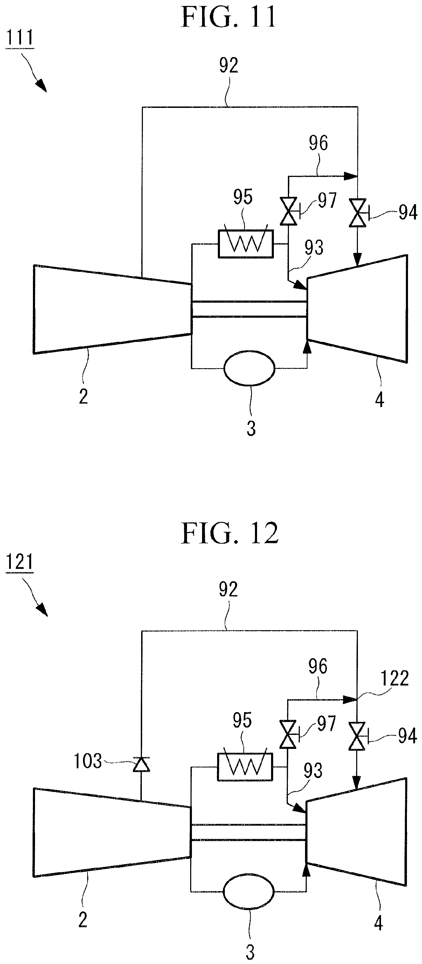

Here is a description of the gas turbine according to an sixth example serving to explain features of the present invention with reference to FIG. 11. FIG. 11 is a system diagram of the gas turbine according to this example. As shown in FIG. 11, the gas turbine 111 of this examplediffers from the gas turbine of the aforementioned fifth example, in the point where the upstream end of the connecting pipe 96 is connected to the rotor cooling air system 93 at the downstream side of the cooler 95, and the downstream end of the connecting pipe 96 is connected to the stator cooling air system 92 at the upstream side of the first control valve 94, and at the downstream side of the merge point 102 that is described in the fifth embodiment. The other components are the same as those of the aforementioned fifth example, and thus these components are not described herein.

According to the gas turbine 111 of this example, the turn down operation is enabled by using the stator cooling air system 92 and the rotor cooling air system 93 which are already existing therein (as essential components). Therefore, the system and the operation of the gas turbine can be simplified, and also the production cost and the maintenance cost can be reduced. Moreover, upon the turn down operation, the second control valve 97 is opened. As a result, the (high pressure) compressed air that has been extracted from the exit (rear stage) of the compressor section 2 bypasses the combustor section 3 and runs through the stator cooling air system 92 and the stator vanes (not shown) until it flows in the working fluid path of the turbine section 4. Therefore, the temperature of the exhaust gas can be lowered. Furthermore, upon the turn down operation, the (high pressure) compressed air that has been extracted from the exit (rear stage) of the compressor section 2 bypasses the combustor section 3 and runs through the stator cooling air system 92 and the rotor cooling air system 93 until it flows in the turbine section 4. Therefore, upon the turn down operation, the temperature of the turbine section 4 can be lowered while keeping the turbine inlet temperature high, because of which the service life of parts constituting the turbine section 4 such as turbine blades (rotor blades and stator vanes) can be elongated. During the normal operation (for example, operation at full load), the second control valve 97 is closed. As a result, the (high pressure) compressed air that has been extracted from the exit (rear stage) of the compressor section 2 runs through the rotor cooling air system 93 until it is all let in the turbine section 4.

Here is a description of the gas turbine according to a sixth embodiment of the present invention with reference to FIG. 12. FIG. 12 is a system diagram of the gas turbine according to this embodiment.

As shown in FIG. 12, the gas turbine 121 of this embodiment differs from the gas turbine of the aforementioned sixth example, in the point where the check valve 103 is connected to the stator cooling air system 92 at the upstream side of a merge point 122, where the downstream end of the connecting pipe 96 is merging. The other components are the same as those of the aforementioned sixth example, and thus these components are not described herein.

According to the gas turbine 121 of this embodiment, the compressed air led to the upstream side of the stator cooling air system 92 via the connecting pipe 96 and the second control valve 97 can be kept from flowing from the merge point 122 toward the compressor section 2, by the check valve 103. Therefore, the backflow from the merge point 122 to the compressor section 2 can be reliably prevented. The other operations and effects are the same as those of the aforementioned sixth example, and thus are not described herein.

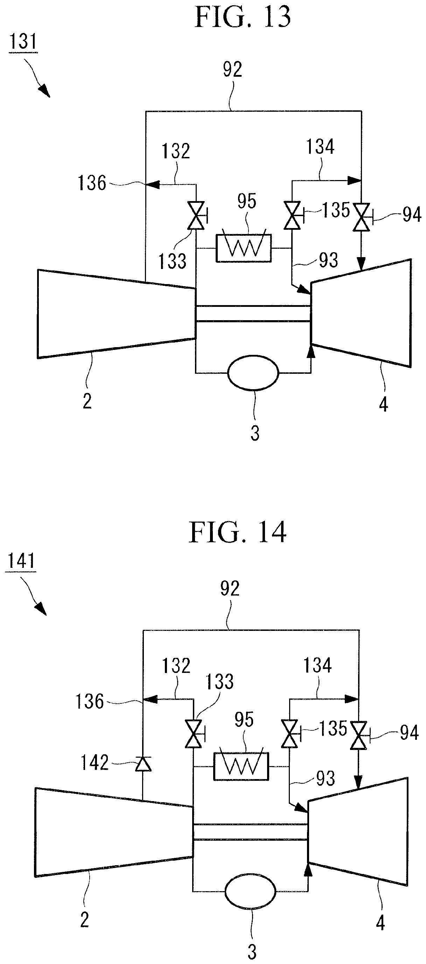

Here is a description of the gas turbine according to a seventh example serving to explain features of the present invention with reference to FIG. 13. FIG. 13 is a system diagram of the gas turbine according to this example. As shown in FIG. 13, the gas turbine 131 of this examplediffers from the gas turbine of the aforementioned fifth through sixth examples and embodiments, in the point where a first connecting pipe (connecting path) 132, a second control valve (flow rate control part) 133, a second connecting pipe (connecting path) 134, and a third control valve (flow rate control part) 135 are provided instead of the connecting pipe 96 and the second control valve 97. The other components are the same as those of the aforementioned fifth through sixth examples and embodiments, and thus these components are not described herein.

The rotor cooling air system 93 at the upstream side of the cooler 95 and the stator cooling air system 92 at the upstream side of the first control valve 94 are connected by the first connecting pipe 132. At midstream of this first connecting pipe 132, there is the second control valve 133 connected, the opening degree of which can be adjusted by a controller (not shown).

In addition, the rotor cooling air system 93 at the downstream side of the cooler 95 and the stator cooling air system 92 at the upstream side of the first control valve 94 and at the downstream side of a merge point 136, where the downstream end of the first connecting pipe 132 is merging, are connected by a second connecting pipe 134. At midstream of this second connecting pipe 134, there is the third control valve 135 connected, the opening degree of which can be adjusted by a controller (not shown).

According to the gas turbine 131 of this example, the turn down operation is enabled by using the stator cooling air system 92 and the rotor cooling air system 93 which are already existing therein (as essential components). Therefore, the system and the operation of the gas turbine can be simplified, and also the production cost and the maintenance cost can be reduced.

Moreover, upon the turn down operation, the second control valve 133 and the third control valve 135 are opened. As a result, the (high pressure) compressed air that has been extracted from the exit (rear stage) of the compressor section 2 bypasses the combustor section 3 and runs through the stator cooling air system 92 and the stator vanes (not shown) until it flows in the working fluid path of the turbine section 4. Therefore, the temperature of the exhaust gas can be lowered.

Furthermore, upon the turn down operation, the (high pressure) compressed air that has been extracted from the exit (rear stage) of the compressor section 2 bypasses the combustor section 3 and runs through the stator cooling air system 92 and the rotor cooling air system 93 until it flows in the turbine section 4. Therefore, upon the turn down operation, the temperature of the turbine section 4 can be lowered while keeping the turbine inlet temperature high, because of which the service life of parts constituting the turbine section 4 such as turbine blades (rotor blades and stator vanes) can be elongated.

During the normal operation (for example, operation at full load), the second control valve 133 is closed. As a result, the (high pressure) compressed air that has been extracted from the exit (rear stage) of the compressor section 2 runs through the stator cooling air system 92 and the rotor cooling air system 93 until it is all let in the turbine section 4.

Here is a description of the gas turbine according to a seventh embodiment of the present invention with reference to FIG. 14. FIG. 14 is a system diagram of the gas turbine according to this embodiment.

As shown in FIG. 14, the gas turbine 141 of this embodiment differs from the gas turbine of the aforementioned seventh example, in the point where a check valve (backflow prevention part) 142 is connected to the stator cooling air system 92 at the upstream side of the merge point 136. The other components are the same as those of the aforementioned seventh example, and thus these components are not described herein.

According to the gas turbine 141 of this embodiment, the compressed air led to the upstream side of the stator cooling air system 92 via the first connecting pipe 132 and the second control valve 133, and/or the compressed air led to the upstream side of the stator cooling air system 92 via the second connecting pipe 134 and the third control valve 135, can be kept from flowing from the merge point 136 toward the compressor section 2, by the check valve 142. Therefore, the backflow from the merge point 136 to the compressor section 2 can be reliably prevented.

The other operations and effects are the same as those of the aforementioned seventh example, and thus are not described herein.

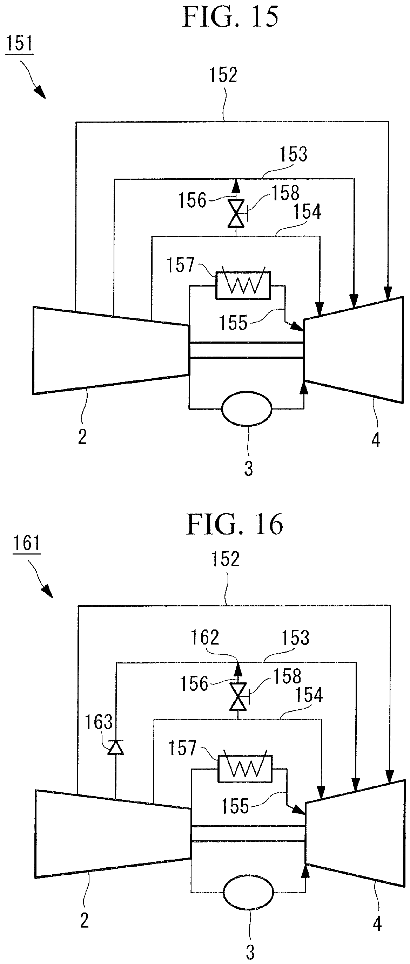

Here is a description of the gas turbine according to an eighth embodiment of the present invention with reference to FIG. 15. FIG. 15 is a system diagram of the gas turbine according to this embodiment.

As shown in FIG. 15, the gas turbine 151 of this embodiment comprises: a compressor section 2 for compressing combustion air; a combustor section 3 for injecting a fuel into high pressure air being sent from this compressor section 2, to effect combustion so as to generate a high temperature combustion gas; and a turbine section 4 which is located at the downstream side of this combustor section 3, and is driven by the combustion gas coming out from the combustor section 3, as main components.

In addition, the gas turbine 151 of this embodiment also comprises: a first stator cooling air system 152 for leading (low pressure) compressed air that has been extracted from a low-pressure stage of the compressor section 2, into stator vanes (for example, fourth stage stator vanes) which constitute the turbine section 4; a second stator cooling air system 153 for leading (medium pressure) compressed air that has been extracted from a medium-pressure stage of the compressor section 2, into stator vanes (for example, third stage stator vanes) which constitute the turbine section 3; a third stator cooling air system 154 for leading (high pressure) compressed air that has been extracted from a high-pressure stage of the compressor section 2, into stator vanes (for example, second stage stator vanes) which constitute the turbine section 3; and a rotor cooling air system 155 for leading compressed air that has been extracted from the exit of the compressor section 2 (having a higher pressure than the pressure of the compressed air extracted from the high-pressure stage of the compressor section 2), into a rotor (not shown) which constitutes the turbine section 4. Moreover, midstream of the second stator cooling air system 153 and midstream of the third stator cooling air system 154 are connected by the connecting pipe (connecting path) 156 so that a part of the compressed air passing through the third stator cooling air system 154 can be led to the second stator cooling air system 153 via the connecting pipe 156. Meanwhile, at midstream of the rotor cooling air system 155, there is a cooler 157 which cools down the compressed air passing therethrough connected. At midstream of the connecting pipe 156, there is a control valve (flow rate control part) 158 connected, the opening degree of which can be adjusted by a controller (not shown).

According to the gas turbine 151 of this embodiment, the turn down operation is enabled by using the stator cooling air systems 152, 153, and 154 which are already existing therein (as essential components). Therefore, the system and the operation of the gas turbine can be simplified, and also the production cost and the maintenance cost can be reduced. Moreover, upon the turn down operation, the control valve 158 is opened. As a result, the (high pressure) compressed air that has been extracted from the high-pressure stage of the compressor section 2 bypasses the combustor section 3 and runs through the second stator cooling air system 153 and the stator vanes (for example, third stage stator vanes) until it flows in the working fluid path of the turbine section 4. Therefore, the temperature of the exhaust gas can be lowered. Furthermore, upon the turn down operation, the (high pressure) compressed air that has been extracted from the high-pressure stage of the compressor section 2 bypasses the combustor section 3 and runs through the second stator cooling air system 153 and the stator vanes (for example, third stage stator vanes) until it flows the turbine section 4.

Therefore, upon the turn down operation, the temperature of the turbine section 4 can be lowered while keeping the turbine inlet temperature high, because of which the service life of parts constituting the turbine section 4 such as turbine blades (rotor blades and stator vanes) can be elongated.

During the normal operation (for example, operation at full load), the control valve 158 is closed. As a result, the (high pressure) compressed air that has been extracted from the high-pressure stage of the compressor section 2 runs through the third stator cooling air system 154 and the stator vanes (for example, second stage stator vane) until it is all let in the turbine section 4.

Here is a description of the gas turbine according to a ninth embodiment of the present invention with reference to FIG. 16. FIG. 16 is a system diagram of the gas turbine according to this embodiment.

As shown in FIG. 16, the gas turbine 161 of this embodiment differs from the gas turbine of the aforementioned eighth embodiment, in the point where a check valve (backflow prevention part) 163 is connected to the second stator cooling air system 153 at the upstream side of a merge point 162, where the downstream end of the connecting pipe 156 is merging. The other components are the same as those of the aforementioned eighth embodiment, and thus these components are not described herein.

According to the gas turbine 161 of this embodiment, the compressed air led to the midstream of the second stator cooling air system 153 via the connecting pipe 156 can be kept from flowing from the merge point 162 toward the compressor section 2, by the check valve 163. Therefore, the backflow from the merge point 162 to the compressor section 2 can be reliably prevented.

The other operations and effects are the same as those of the aforementioned eighth embodiment, and thus are not described herein.

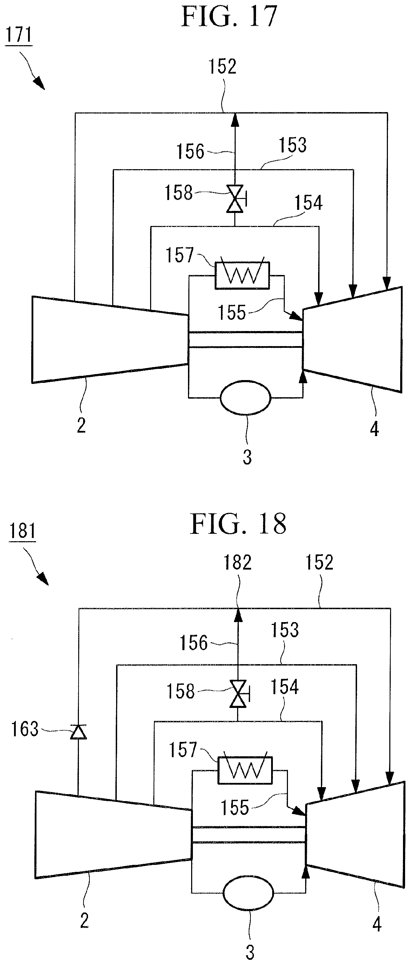

Here is a description of the gas turbine according to a tenth embodiment of the present invention with reference to FIG. 17. FIG. 17 is a system diagram of the gas turbine according to this embodiment.

As shown in FIG. 17, the gas turbine 171 of this embodiment differs from the gas turbine of the aforementioned eighth embodiment, in the point where the downstream end of the connecting pipe 156 is connected to midstream of the first stator cooling air system 152. The other components are the same as those of the aforementioned eighth embodiment, and thus these components are not described herein.

According to the gas turbine 171 of this embodiment, the turn down operation is enabled by using the stator cooling air systems 152, 153, and 154 which are already existing therein (as essential components). Therefore, the system and the operation of the gas turbine can be simplified, and also the production cost and the maintenance cost can be reduced. Moreover, upon the turn down operation, the (high pressure) compressed air that has been extracted from the high-pressure stage of the compressor section 2 bypasses the combustor section 3 and runs through the first stator cooling air system 152 and the stator vanes (for example, fourth stage stator vanes) until it flows in the working fluid path of the turbine section 4. Therefore, the temperature of the exhaust gas can be lowered.

Furthermore, upon the turn down operation, the (high pressure) compressed air that has been extracted from the high-pressure stage of the compressor section 2 bypasses the combustor section 3 and runs through the first stator cooling air system 152 and the stator vanes (for example, fourth stage stator vanes) until it flows in the turbine section 4. Therefore, upon the turn down operation, the temperature of the turbine section 4 can be lowered while keeping the turbine inlet temperature high, because of which the service life of parts constituting the turbine section 4 such as turbine blades (rotor blades and stator vanes) can be elongated.

Here is a description of the gas turbine according to an eleventh embodiment of the present invention with reference to FIG. 18. FIG. 18 is a system diagram of the gas turbine according to this embodiment.

As shown in FIG. 18, the gas turbine 181 of this embodiment differs from the gas turbine of the aforementioned tenth embodiment, in the point where the check valve 163 is connected to the first stator cooling air system 152 at the upstream side of a merge point 182, where the downstream end of the connecting pipe 156 is merging. The other components are the same as those of the aforementioned tenth embodiment, and thus these components are not described herein.

According to the gas turbine 171 of this embodiment, the compressed air led to the midstream of the first stator cooling air system 152 via the connecting pipe 156 can be kept from flowing from the merge point 182 toward the compressor section 2, by the check valve 163. Therefore, the backflow from the merge point 182 to the compressor section 2 can be reliably prevented.

The other operations and effects are the same as those of the aforementioned seventeenth embodiment, and thus are not described herein.

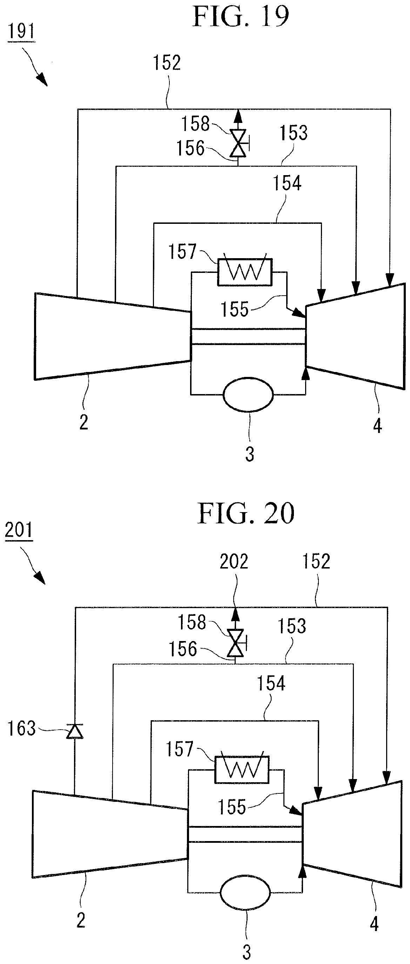

Here is a description of the gas turbine according to a twelfth embodiment of the present invention with reference to FIG. 19. FIG. 19 is a system diagram of the gas turbine according to this embodiment.

As shown in FIG. 19, the gas turbine 191 of this embodiment differs from the gas turbine of the aforementioned tenth embodiment, in the point where the upstream end of the connecting pipe 156 is connected to midstream of the second stator cooling air system 153. The other components are the same as those of the aforementioned tenth embodiment, and thus these components are not described herein.

According to the gas turbine 191 of this embodiment, the turn down operation is enabled by using the stator cooling air systems 152, 153, and 154 which are already existing therein (as essential components). Therefore, the system and the operation of the gas turbine can be simplified, and also the production cost and the maintenance cost can be reduced. Moreover, upon the turn down operation, the (medium pressure) compressed air that has been extracted from the medium-pressure stage of the compressor section 2 bypasses the combustor section 3 and runs through the first stator cooling air system 152 and the stator vanes (for example, fourth stage stator vanes) until it flows the working fluid path of the turbine section 4. Therefore, the temperature of the exhaust gas can be lowered.

Furthermore, upon the turn down operation, the (medium pressure) compressed air that has been extracted from the medium-pressure stage of the compressor section 2 bypasses the combustor section 3 and runs through the first stator cooling air system 152 and the stator vanes (for example, fourth stage stator vanes) until it flows in the turbine section 4. Therefore, upon the turn down operation, the temperature of the turbine section 4 can be lowered while keeping the turbine inlet temperature high, because of which the service life of parts constituting the turbine section 4 such as turbine blades (rotor blades and stator vanes) can be elongated.

Here is a description of the gas turbine according to a thirteenth embodiment of the present invention with reference to FIG. 20. FIG. 20 is a system diagram of the gas turbine according to this embodiment.

As shown in FIG. 20, the gas turbine 201 of this embodiment differs from the gas turbine of the aforementioned twelfth embodiment, in the point where the check valve 163 is connected to the first stator cooling air system 152 at the upstream side of the merge point 182, where the downstream end of the connecting pipe 156 is merging. The other components are the same as those of the aforementioned twelfth embodiment, and thus these components are not described herein.

According to the gas turbine 201 of this embodiment, the compressed air led to the midstream of the first stator cooling air system 152 via the connecting pipe 156 can be kept from flowing from the merge point 202 toward the compressor section 2, by the check valve 163. Therefore, the backflow from the merge point 202 to the compressor section 2 can be reliably prevented.

The other operations and effects are the same as those of the aforementioned twelfth embodiment, and thus are not described herein.

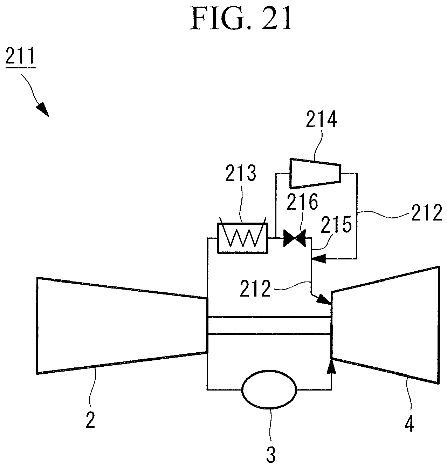

Here is a description of the gas turbine according to a fourteenth embodiment of the present invention with reference to FIG. 21. FIG. 21 is a system diagram of the gas turbine according to this embodiment.

As shown in FIG. 21, the gas turbine 211 of this embodiment comprises: a compressor section 2 for compressing combustion air; a combustor section 3 for injecting a fuel into high pressure air being sent from this compressor section 2, to effect combustion so as to generate a high temperature combustion gas; a turbine section 4 which is located at the downstream side of this combustor section 3, and is driven by the combustion gas coming out from the combustor section 3; and a rotor cooling air system 212 for leading (high pressure) compressed air that has been extracted from the exit (rear stage) of the compressor section 2, into a rotor (not shown) which constitutes the turbine section 4, as main components.

At midstream of the rotor cooling air system 212, there is a cooler 213 which cools down the compressed air passing therethrough connected, and a boost compressor 214 which is turned on or off (started or shut down) by a controller (not shown). In addition, the rotor cooling air system 212 at the downstream side of the cooler 213 and at the upstream side of the boost compressor 214, and the rotor cooling air system 212 at the downstream side of the boost compressor 214 are connected by a bypass system 215. At midstream of this bypass system 215, there is a control valve 216 which is opened or closed by a controller (not shown) connected.

The control valve 216 is not an essential component.

According to the gas turbine 211 of this embodiment, upon the turn down operation, the control valve 216 is closed and the boost compressor 214 is operated. As a result, the (high pressure) compressed air that has been extracted from the high-pressure stage of the compressor section 2 bypasses the combustor section 3 and runs through the rotor cooling air system 212 and the rotor blades until it is forcibly (vigorously) led in the working fluid path of the turbine section 4. Therefore, the temperature of the exhaust gas can be lowered.

Moreover, upon the turn down operation, the (high pressure) compressed air that has been extracted from the exit (rear stage) of the compressor section 2 bypasses the combustor section 3 and runs through the rotor cooling air system 212 until it flows in the turbine section 4.

Therefore, upon the turn down operation, the temperature of the turbine section 4 can be lowered while keeping the turbine inlet temperature high, because of which the service life of parts constituting the turbine section 4 such as turbine blades (rotor blades and stator vanes) can be elongated.

During the normal operation (for example, operation at full load), the control valve 216 is opened and the boost compressor 214 is stopped. As a result, the (high pressure) compressed air that has been extracted from the exit (rear stage) of the compressor section 2 runs through the bypass system 215 until it flows in the turbine section 4.

In the abovementioned examples and embodiments, the tubular connecting pipe is described as a specific example of the connecting path; however, the present invention is not to be limited to this. For example, the connecting path may be a block body having a continuous hole formed therein.

In addition, the "system" referred to in this description may be in any configuration such as a tubular piping and a block body having a continuous hole formed therein, as long as compressed air can pass therethrough.

Furthermore, in the aforementioned eighth through thirteenth embodiments, the configuration comprising three stator cooling air systems is described; however, the present invention is not to be limited to this configuration, and may also comprise two, four, or even more stator cooling air systems.

## Claims

1. A gas turbine (21;41;61;81;101;121;141) comprising:
a compressor section (2) for compressing combustion air;
a combustor section (3) for injecting a fuel into high pressure air being sent from the compressor section (2), to effect combustion so as to generate a high temperature combustion gas;
a turbine section (4) which is located at the downstream side of the combustor section (3), and is arranged to be driven by the combustion gas coming out from said combustor section (3);
a gas turbine casing which houses said compressor section (2), said combustor section (3), and said turbine section (4) therein;
a stator cooling air system (5;92) for leading compressed air that has been extracted from midstream of said compressor section (2) into stator vanes which are a constituent of said turbine section (4); and
an air bleeding system (6;93) for extracting compressed air from the exit of said compressor section (2) to the outside of said gas turbine casing,
wherein midstream of said stator cooling air system (5;92) and midstream of said air bleeding system (6;93) are connected via a connecting path (12;96;132,134), and at midstream of the connecting path (12;96;132,134) there is a flow rate control part (13;97;133,135) connected,
wherein a backflow prevention part (23;103;142) is connected to said stator cooling air system (5;92) at the upstream side of a merge point (22;42;102;122;136) where the downstream end of said connecting path (12;96;132,134) is merging, and
wherein a turn down operation of the gas turbine is enabled in that the flow rate control part (13;97;133,135) is opened by means of a controller so that the compressed air that has been extracted from the exit of said compressor section (2) flows through said stator cooling air system (5; 92).

2. A gas turbine (161;181;201) comprising:
a compressor section (2) for compressing combustion air;
a combustor section (3) for injecting a fuel into high pressure air being sent from the compressor section (2), to effect combustion so as to generate a high temperature combustion gas;
a turbine section (4) which is located at the downstream side of the combustor section (3), and is arranged to be driven by the combustion gas coming out from said combustor section (3);
a gas turbine casing which houses said compressor section (2), said combustor section (3), and said turbine section (4) therein; and
at least two stator cooling air systems (152;153;154) for respectively leading at least two types of compressed air that have been extracted from at least two positions having different pressures of said compressor section (2) into respective stator vanes which constitute said turbine section (4), according to the pressure of the extracted compressed air,
wherein at least two of said stator cooling air systems are connected via a connecting path (156), and at midstream of the connecting path (156) there is a flow rate control part (158) connected,
wherein a backflow prevention part (163) is connected to the stator cooling air system at the upstream side of a merge point (162;182;202), where the downstream end of said connecting path (156) is merging, and
wherein a turn down operation of the gas turbine is enabled in that the flow rate control part (158) is opened by means of a controller so that the compressed air that has been extracted from the exit of said compressor section (2) flows through said stator cooling air system(s) (152;153;154).

3. A gas turbine (161) according to claim 2, comprising:
a first stator cooling air system (152) for leading compressed air that has been extracted from a low-pressure stage of said compressor section (2) into low-pressure stage stator vanes which are a constituent of said turbine section (4); and
a second stator cooling air system (154) for leading compressed air that has been extracted from a high-pressure stage of said compressor section (2) into high-pressure stage stator vanes which are a constituent of said turbine section (4),wherein midstream of said first stator cooling air system (152) and midstream of said second stator cooling air system (154) are connected via said connecting path (156).

4. A gas turbine (151;161;171;181;191;201) comprising:
a compressor section (2) for compressing combustion air;
a combustor section (3) for injecting a fuel into high pressure air being sent from this compressor section (2), to effect combustion so as to generate a high temperature combustion gas;
a turbine section (4) which is located at the downstream side of this combustor section (3), and is arranged to be driven by the combustion gas coming out from said combustor section (3);
a first stator cooling air system (152) for leading compressed air that has been extracted from a low-pressure stage of said compressor section (2), into low-pressure stage stator vanes which are a constituent of said turbine section (4) ;
a second stator cooling air system (153) for leading compressed air that has been extracted from a medium-pressure stage of said compressor section (2), into medium-pressure stage stator vanes which are a constituent said turbine section (4);
a third stator cooling air system (154) for leading compressed air that has been extracted from a high-pressure stage of said compressor section (2), into high-pressure stage stator vanes which are a constituent of said turbine section (4), and
a controller;
**characterized in that**
a1) midstream of said second stator cooling air system (153) and midstream of said third stator cooling air system (154), or
b1) midstream of said first stator cooling air system (152) and midstream of said second stator cooling air system (153), or
c1) midstream of said first stator cooling air system (152) and midstream of said third stator cooling air system (154),
are connected via a connecting path (156), wherein a flow rate control part (158) is connected at midstream of the connecting path (156), and
the controller is configured to adjust the opening degree of the flow rate control part (158) to enable a turn down operation of the gas turbine **in that**
a2) the compressed air that has been extracted from the high-pressure stage of said compressor section (2) flows through said second stator cooling air system (153), or
b2) the compressed air that has been extracted from the medium-pressure stage of said compressor section (2) flows through said first stator cooling air system (152), or
c2) the compressed air that has been extracted from the high-pressure stage of said compressor section (2) flows through said first stator cooling air system (152).

5. A gas turbine according to claim 4, wherein a backflow prevention part (163) is connected to
a3) said second stator cooling air system (153) at the upstream side of a merge point (162), where the downstream end of said connecting path (156) is merging, or
b3/c3) said first stator cooling air system (152) at the upstream side of a merge point (182;202), where the downstream end of said connecting path (156) is merging.

6. A gas turbine (211) comprising:
a compressor section (2) for compressing combustion air;
a combustor section (3) for injecting a fuel into high pressure air being sent from this compressor section (2) to effect combustion so as to generate a high temperature combustion gas;
a turbine section (4) which is located at the downstream side of this combustor section (2), and is arranged to be driven by the combustion gas coming out from said combustor section (3); and
a rotor cooling air system (212) for leading compressed air that has been extracted from an exit of said compressor section (2), into a rotor which is a constituent of said turbine section (4),
wherein at midstream of said rotor cooling air system (212) there is a boost compressor (214) connected, a bypass system (215) for bypassing said boost compressor (214) is provided, and a control valve (216) is connected at midstream of the bypass system (215), and
wherein a controller is provided that is configured to, upon a turn down operation of the gas turbine, close the control valve (216) and operate the boost compressor (214) so that the compressed air runs through the rotor cooling air system (212) until it is forcibly led in a working fluid path of the turbine section (4).

## Patentansprüche

1. Eine Gasturbine (21;41;61;81;101;121;141) mit:
einem Kompressorabschnitt (2) zum Komprimieren von Verbrennungsluft,
einem Verbrennerabschnitt (3) zum Einspritzen eines Brennstoffs in Hochdruckluft, die von dem Kompressorabschnitt (2) geliefert wird, zum Bewirken einer Verbrennung, um ein Hochtemperaturverbrennungsgas zu erzeugen,
einem Turbinenabschnitt (4), der sich an der stromabwärtigen Seite des Verbrennerabschnitts (3) befindet, und der angeordnet ist, um durch das aus dem Verbrennerabschnitt (3) austretende Verbrennungsgas angetrieben zu werden,
einem Gasturbinengehäuse, das den Kompressorabschnitt (2), den Verbrennerabschnitt (3) und den Turbinenabschnitt (4) darin aufnimmt,
einem Stator-Kühlluftsystem (5;92) zum Führen von komprimierter Luft, die von einem Mittelabschnitt des Kompressorabschnitts (2) extrahiert wurde, in Stator-Flügel, die ein Element des Turbinenabschnitts (4) sind, und
einem Luftzapfsystem (6;93) zum Extrahieren von komprimierter Luft von dem Ausgang des Kompressorabschnitts (2) zu der Außenseite des Gasturbinengehäuses,
wobei ein Mittelabschnitt des Stator-Kühlluftsystems (5;92) und ein Mittelabschnitt des Luftzapfsystems (6;93) über einen Verbindungsweg (12;96;132,134) verbunden sind, und an einem Mittelabschnitt des Verbindungswegs (12;96;132,134) ein Strömungsratensteuerteil (13;97;133,135) verbunden ist,
wobei ein Rückströmungsverhinderungsteil (23;103;142) mit dem Stator-Kühlluftsystem (5;92) an der stromaufwärtigen Seite eines Vereinigungspunkts (22;42;102;122;136) verbunden ist, wo das stromabwärtige Ende des Verbindungswegs (12;96;132,134) verbunden ist, und
wobei ein Betrieb zum Herunterfahren der Gasturbine dadurch ermöglicht ist, dass das Strömungsratensteuerteil (13;97;133,135) mittels eines Kontrollers so geöffnet wird, dass die komprimierte Luft, die von dem Ausgang des Kompressorabschnitts (2) extrahiert wurde, durch das Stator-Kühlluftsystem (5;92) strömt.

2. Eine Gasturbine (161;181;201) mit:
einem Kompressorabschnitt (2) zum Komprimieren von Verbrennungsluft,
einem Verbrennerabschnitt (3) zum Einspritzen eines Brennstoffs in Hochdruckluft, die von dem Kompressorabschnitt (2) geliefert wird, zum Bewirken einer Verbrennung, um ein Hochtemperaturverbrennungsgas zu erzeugen,
einem Turbinenabschnitt (4), der sich an der stromabwärtigen Seite des Verbrennerabschnitts (3) befindet, und der angeordnet ist, um durch das aus dem Verbrennerabschnitt (3) austretende Verbrennungsgas angetrieben zu werden,
einem Gasturbinengehäuse, das den Kompressorabschnitt (2), den Verbrennerabschnitt (3) und den Turbinenabschnitt (4) darin aufnimmt,
zumindest zwei Stator-Kühlluftsystemen (152;153;154) zum jeweiligen Führen von zumindest zwei Arten von komprimierter Luft, die von zumindest zwei Positionen des Kompressorabschnitts (2) mit unterschiedlichen Drücken extrahiert wurden, in jeweilige Stator-Flügel, die den Turbinenabschnitt (4) bilden, gemäß dem Druck der extrahierten komprimierten Luft,
wobei zumindest zwei der Stator-Kühlluftsysteme über einen Verbindungsweg (156) verbunden sind, und an einem Mittelabschnitt des Verbindungswegs (156) ein Strömungsratensteuerteil (158) verbunden ist,
wobei ein Rückströmungsverhinderungsteil (163) mit dem Stator-Kühlluftsystem an der stromaufwärtigen Seite eines Vereinigungspunkts (162;182;202) verbunden ist, wo das stromabwärtige Ende des Verbindungswegs (156) verbunden ist, und
wobei ein Betrieb des Herunterfahrens der Gasturbine dadurch ermöglicht ist, dass das Strömungsratensteuerteil (158) mittels eines Kontrollers so geöffnet wird, dass die komprimierte Luft, die von dem Ausgang des Kompressorabschnitts (2) extrahiert wurde, durch das/die Stator-Kühlluftsystem/-systeme (152;153;154) strömt.

3. Eine Gasturbine (161) gemäß Anspruch 2, mit:
einem ersten Stator-Kühlluftsystem (152) zum Führen von komprimierter Luft, die von einer Niederdruckstufe des Kompressorabschnitts (2) extrahiert wurde, in Niederdruckstufen-Stator-Flügel, die ein Element des Turbinenabschnitts (4) sind, und
einem zweiten Stator-Kühlluftsystem (154) zum Führen von komprimierter Luft, die von einer Hochdruckstufe des Kompressorabschnitts (2) extrahiert wurde, in Hochdruckstufen-Stator-Flügel, die ein Element des Turbinenabschnitts (4) sind, wobei ein Mittelabschnitt des ersten Stator-Kühlluftsystems (152) und ein Mittelabschnitt des zweiten Stator-Kühlluftsystems (154) über den Verbindungsweg (156) verbunden sind.

4. Eine Gasturbine (151;161;171;181;191;201) mit:
einem Kompressorabschnitt (2) zum Komprimieren von Verbrennungsluft,
einem Verbrennerabschnitt (3) zum Einspritzen eines Brennstoffs in Hochdruckluft, die von dem Kompressorabschnitt (2) geliefert wird, zum Bewirken einer Verbrennung, um ein Hochtemperaturverbrennungsgas zu erzeugen,
einem Turbinenabschnitt (4), der sich an der stromabwärtigen Seite des Verbrennerabschnitts (3) befindet, und der angeordnet ist, um durch das aus dem Verbrennerabschnitt (3) austretende Verbrennungsgas angetrieben zu werden,
einem ersten Stator-Kühlluftsystem (152) zum Führen von komprimierter Luft, die von einer Niederdruckstufe des Kompressorabschnitts (2) extrahiert wurde, in Niederdruckstufen-Stator-Flügel, die ein Element des Turbinenabschnitts (4) sind,
einem zweiten Stator-Kühlluftsystem (153) zum Führen von komprimierter Luft, die von einer Mitteldruckstufe des Kompressorabschnitts (2) extrahiert wurde, in Mitteldruckstufen-Stator-Flügel, die ein Element des Turbinenabschnitts (4) sind,
einem dritten Stator-Kühlluftsystem (154) zum Führen von komprimierter Luft, die von einer Hochdruckstufe des Kompressorabschnitts (2) extrahiert wurde, in Hochdruckstufen-Stator-Flügel, die ein Element des Turbinenabschnitts (4) sind, und
einem Kontroller,
**dadurch gekennzeichnet, dass**
a1) ein Mittelabschnitt des zweiten Stator-Kühlluftsystems (153) und ein Mittelabschnitt des dritten Stator-Kühlluftsystems (154), oder
b1) ein Mittelabschnitt des ersten Stator-Kühlluftsystems (152) und ein Mittelabschnitt des zweiten Stator-Kühlluftsystems (153), oder
c1) ein Mittelabschnitt des ersten Stator-Kühlluftsystems (152) und ein Mittelabschnitt des dritten Stator-Kühlluftsystems (154),
über einen Verbindungsweg (156) verbunden sind, wobei ein Strömungsratensteuerteil (158) an einem Mittelabschnitt des Verbindungswegs (156) verbunden ist, und
der Kontroller konfiguriert ist, um den Öffnungsgrad des Strömungsratensteuerteils (158) einzustellen, um einen Betrieb eines Herunterfahrens der Gasturbine dadurch zu ermöglichen, dass
a2) die komprimierte Luft, die von der Hochdruckstufe des Kompressorabschnitts (2) extrahiert wurde, durch das zweite Stator-Kühlluftsystem (153) strömt, oder
b2) die komprimierte Luft, die von der Mitteldruckstufe des Kompressorabschnitts (2) extrahiert wurde, durch das erste Stator-Kühlluftsystem (152) strömt, oder
c2) die komprimierte Luft, die von der Hochdruckstufe des Kompressorabschnitts (2) extrahiert wurde, durch das erste Stator-Kühlluftsystem (152) strömt.

5. Eine Gasturbine gemäß Anspruch 4, wobei ein Rückströmungsverhinderungsteil (163) verbunden ist mit
a3) dem zweiten Stator-Kühlluftsystem (153) an der Stromaufseite eines Vereinigungspunkts (162), wo das stromabwärtige Ende des Verbindungswegs (156) verbunden ist, oder
b3/c3) dem ersten Stator-Kühlluftsystem (152) an der stromaufwärtigen Seite eines Vereinigungspunkts (182;202), wo das stromabwärtige Ende des Verbindungswegs (156) verbunden ist.

6. Eine Gasturbine (211) mit:
einem Kompressorabschnitt (2) zum Komprimieren von Verbrennungsluft,
einem Verbrennerabschnitt (3) zum Einspritzen eines Brennstoffs in Hochdruckluft, die von dem Kompressorabschnitt (2) geliefert wird, zum Bewirken einer Verbrennung, um ein Hochtemperaturverbrennungsgas zu erzeugen,
einem Turbinenabschnitt (4), der sich an der stromabwärtigen Seite des Verbrennerabschnitts (3) befindet, und der angeordnet ist, um durch das aus dem Verbrennerabschnitt (3) austretende Verbrennungsgas angetrieben zu werden,
einem Rotor-Kühlluftsystem (212) zum Führen von komprimierter Luft, die von einem Ausgang des Kompressorabschnitts (2) extrahiert wurde, in einen Rotor, der ein Element des Turbinenabschnitts (4) ist,
wobei an einem Mittelabschnitt des Rotor-Kühlluftsystems (212) ein Boostkompressor (214) verbunden ist, ein Bypass-System (215) zum Umgehen des Boostkompressors (214) vorgesehen ist, und ein Steuerventil (216) an einem Mittelabschnitt des Bypass-Systems (215) verbunden ist, und
wobei ein Controller vorgesehen ist, der konfiguriert ist, um bei einem Betrieb eines Herunterfahrens der Gasturbine das Steuerventil (216) zu schließen und den Boostkompressor (214) zu betätigen, sodass die komprimierte Luft durch das Rotor-Kühlluftsystem (212) läuft, bis sie zwangsweise in einen Arbeitsfluidweg des Turbinenabschnitts (4) geführt wird.

## Revendications

1. Turbine (21 ; 41 ; 61 ; 81 ; 101 ; 121 ; 141) à gaz, comprenant :
une partie (2) de compresseur pour comprimer de l'air de combustion ;
une partie (3) de chambre de combustion pour injecter un combustible dans de l'air à haute pression envoyé de la partie (2) de compresseur, afin d'effectuer une combustion pour produire des gaz de combustion à haute température ;
une partie (4) de turbine, qui est placée en aval de la partie (3) de chambre de combustion et qui est conçue pour être entraînée par les gaz de combustion sortant de la partie (3) de chambre de combustion ;
une enveloppe de turbine à gaz, dans laquelle est logée la partie (2) de compresseur, la partie (3) de chambre de combustion et la partie (4) de turbine ;
un système (5 ; 92) à air de refroidissement d'un stator pour renvoyer de l'air comprimé, qui a été extrait de l'axe médian d'écoulement de la partie (2) de compresseur, dans des aubes de stator, qui sont un constituant de la partie (4) de turbine ; et
un système (6 ; 93) d'évacuation de l'air pour extraire de l'air comprimé par la sortie de la partie (2) de compresseur à l'extérieur de l'enveloppe de la turbine à gaz,
dans laquelle l'axe médian d'écoulement du système (5 ; 92) d'air de refroidissement d'un stator et l'axe médian d'écoulement du système (6 ; 93) d'évacuation d'air communiquent par un trajet (12 ; 96 ; 132, 134) de communication et sur l'axe médian d'écoulement du trajet (12 ; 96 ; 132, 134) de communication est montée une partie (13 ; 97 ; 133, 135) de commande de débit,
dans laquelle une partie (23 ; 103 ; 142), empêchant un écoulement en retour, est montée dans le système (5 ; 92) d'air de refroidissement d'un stator en amont d'un point (22 ; 42 ; 102 ; 122 ; 136) de convergence où l'extrémité aval du trajet (12 ; 96 ; 132, 134) de communication converge, et
dans laquelle un fonctionnement de mise en sourdine de la turbine à gaz est rendu possible en ce que la partie (13 ; 97 ; 133, 135) de commande de débit est ouverte au moyen d'une unité de commande, de manière à ce que l'air comprimé, qui a été extrait par la sortie de la partie (2) de compresseur, passe dans le système (5 ; 92) d'air de refroidissement d'un stator.

2. Turbine (161 ; 181 ; 201) à gaz, comprenant :
une partie (2) de compresseur pour comprimer de l'air de combustion ;
une partie (3) de chambre de combustion pour injecter un combustible dans de l'air à haute pression envoyé de la partie (2) de compresseur, afin d'effectuer une combustion pour produire des gaz de combustion à haute température ;
une partie (4) de turbine, qui est placée en aval de la partie (3) de chambre de combustion et qui est conçue pour être entraînée par les gaz de combustion sortant de la partie (3) de chambre de combustion ;
une enveloppe de turbine à gaz, dans laquelle est logée la partie (2) de compresseur, la partie (3) de chambre de combustion et la partie (4) de turbine ; et
au moins deux systèmes (152 ; 53 ; 154) d'air de refroidissement de stator pour envoyer, respectivement, au moins deux types d'air comprimé, qui ont été extraits en au moins deux positions ayant des pressions différentes de la partie (2) de compresseur, dans des aubes de stator respectives, qui constituent la partie (4) de turbine, selon la pression de l'air comprimé extrait,
dans laquelle au moins deux des systèmes d'air de refroidissement d'un stator communiquent par l'intermédiaire d'un trajet (156) de communication et sur l'axe médian d'écoulement du trajet (156) de communication est montée une partie (158) de commande de débit,
dans laquelle une partie (163) empêchant un écoulement en retour est montée sur le système d'air de refroidissement de stator en amont d'un point (162 ; 182 ; 202) de convergence où l'extrémité aval du trajet (156) de communication converge, et
dans laquelle un fonctionnement de mise en sourdine de la turbine à gaz est rendu possible en ce que la partie (158) de commande de débit est ouverte au moyen d'une unité de commande, de manière à ce que l'air comprimé, qui a été extrait par la sortie de la partie (2) de compresseur, passe dans le ou les systèmes (152 ; 153 ; 154) d'air de refroidissement d'un stator.

3. Turbine (161) à gaz suivant la revendication 2, comprenant :
un premier système (152) d'air de refroidissement d'un stator pour envoyer de l'air comprimé, qui a été extrait d'un étage de basse pression de la partie (2) de compresseur, dans des aubes de stator d'un étage de basse pression, qui sont un constituant de la partie (4) de turbine ; et
un deuxième système (154) d'air de refroidissement d'un stator pour envoyer de l'air comprimé, qui a été extrait d'un étage de haute pression de la partie (2) de compresseur, dans des aubes de stator d'un étage de haute pression, qui sont un constituant de la partie (4) de turbine, l'axe médian d'un écoulement du premier système (152) d'air de refroidissement d'un stator et l'axe médian d'écoulement du deuxième système (154) d'air de refroidissement d'un stator communiquant par le trajet (156) de communication.

4. Turbine (151 ; 161 ; 171 ; 181 ; 191 ; 201) à gaz, comprenant :
une partie (2) de compresseur pour comprimer de l'air de combustion ;
une partie (3) de chambre de combustion pour injecter un combustible dans de l'air à haute pression envoyé de la partie (2) de compresseur, afin d'effectuer une combustion pour produire des gaz de combustion à haute température ;
une partie (4) de turbine, qui est placée en aval de la partie (3) de chambre de combustion et qui est conçue pour être entraînée par les gaz de combustion sortant de la partie (3) de chambre de combustion ;
un premier système (152) d'air de refroidissement d'un stator pour envoyer de l'air comprimé, qui a été extrait d'un étage de basse pression de la partie (2) de compresseur, dans des aubes de stator d'un étage de basse pression, qui sont un constituant de la partie (4) de turbine ;
un deuxième système (153) d'air de refroidissement d'un stator pour envoyer de l'air comprimé, qui a été extrait d'un étage de moyenne pression de la partie (2) de compresseur, dans des aubes de stator d'un étage de moyenne pression, qui sont un constituant de la partie (4) de turbine ;
un troisième système (154) d'air de refroidissement d'un stator pour envoyer de l'air comprimé, qui a été extrait d'un étage de haute pression de la partie (2) de compresseur, dans des aubes de stator d'un étage de haute pression, qui sont un constituant de la partie (4) de turbine, et
une unité de commande ;
**caractérisée en ce que**
a1) l'axe médian d'écoulement du deuxième système (153) d'air de refroidissement d'un stator et l'axe médian d'écoulement du troisième système (154) d'air de refroidissement d'un stator, ou
b1) l'axe médian d'écoulement du premier système (152) d'air de refroidissement d'un stator et l'axe médian d'écoulement du deuxième système (153) d'air de refroidissement d'un stator, ou
c1) l'axe médian d'écoulement du premier système (152) d'air de refroidissement d'un stator et l'axe médian d'écoulement du troisième système (154) d'air de refroidissement d'un stator,
communiquent par un trajet (156) de communication, une partie (158) de commande de débit étant montée sur l'axe médian d'écoulement du trajet (156) de connexion, et
l'unité de commande est configurée pour régler le degré d'ouverture de la partie (158) de commande de débit, afin de rendre possible un fonctionnement en sourdine de la turbine à gaz **en ce que**
a2) l'air comprimé, qui a été extrait de l'étage de haute pression de la partie (2) de compresseur, passe dans le deuxième système (153) d'air de refroidissement d'un stator, ou
b2) l'air comprimé, qui a été extrait de l'étage de moyenne pression de la partie (2) de compresseur, passe dans le premier système (152) d'air de refroidissement d'un stator, ou
c2) l'air comprimé, qui a été extrait de l'étage de haute pression de la partie (2) de compresseur, passe dans le premier système (152) d'air de refroidissement d'un stator.

5. Turbine à gaz suivant la revendication 4, dans laquelle une partie (163), empêchant un écoulement en arrière, est montée sur
a3) le deuxième système (153) d'air de refroidissement d'un stator, en amont d'un point (162) de convergence où l'extrémité aval du trajet (156) de communication converge, ou
b3/c3) le premier système (152) d'air de refroidissement d'un stator, en amont d'un point (182 ; 202) de convergence où l'extrémité aval du trajet (156) de communication converge.

6. Turbine (211) à gaz, comprenant :
une partie (2) de compresseur pour comprimer de l'air de combustion ;
une partie (3) de chambre de combustion pour injecter un combustible dans de l'air à haute pression envoyé de la partie (2) de compresseur, afin d'effectuer une combustion pour produire des gaz de combustion à haute température ;
une partie (4) de turbine, qui est placée en aval de la partie (3) de chambre de combustion et qui est conçue pour être entraînée par les gaz de combustion sortant de la partie (3) de chambre de combustion ; et
un système (212) d'air de refroidissement d'un rotor pour envoyer de l'air comprimé, qui a été extrait par une sortie de la partie (2) de compresseur, dans un rotor, qui est un constituant de la partie (4) de turbine,
dans laquelle, sur un axe médian d'écoulement du système (212) d'air de refroidissement d'un rotor, est monté un compresseur (214) de suralimentation, un système (215) de dérivation pour mettre en dérivation le compresseur (214) de suralimentation est prévu et une vanne (216) de commande est montée sur l'axe médian d'écoulement du système (215) de dérivation, et
dans laquelle il est prévu une unité de commande configurée pour, après une mise en fonctionnement en sourdine de la turbine à gaz, fermer la vanne (216) de commande et faire fonctionner le compresseur (214) de suralimentation de manière à ce que l'air comprimé passe dans le système (212) d'air de refroidissement d'un rotor jusqu'à ce qu'il soit envoyé à force dans un trajet de fluide de travail de la partie (4) de turbine.
